Europäisches Patentamt

European Patent Office

Office européen des brevets

(11) Numéro de publication : **0 196 980 B1**

(12) **FASCICULE DE BREVET EUROPÉEN**

(45) Date de publication du fascicule du brevet :
02.11.89

(51) Int. Cl.⁴ : **G 01 C 3/02, G 01 C 3/10**

(21) Numéro de dépôt : **86400715.8**

(22) Date de dépôt : **03.04.86**

(54) **Système de collimatage pour télémétrie optique.**

(30) Priorité : **03.04.85 FR 8505031**

(43) Date de publication de la demande :
**08.10.86 Bulletin 86/41**

(45) Mention de la délivrance du brevet :
**02.11.89 Bulletin 89/44**

(84) Etats contractants désignés :
**BE DE FR GB IT SE**

(56) Documents cités :
**FR-A- 425 511**
**FR-A- 1 349 111**
**US-A- 2 340 623**
**US-A- 2 632 357**
**US-A- 3 002 093**
**NAVAL ENGINEERS JOURNAL, vol. 88, no. 2, avril 1976, pages 180-190; S. FELDMAN et al.: "Automatic passive low light level television gun-director range-finder"**

(73) Titulaire : **HISPANO-SUIZA Société anonyme dite:**
**333, Bureaux de la Colline**
**F-92213 Saint Cloud (FR)**

(72) Inventeur : **Cazenave, Alain Robert**
**2, rue C. Vernet**
**F-92310 - Sevres (FR)**
Inventeur : **Tierrez, Roland Pierre Paul**
**49, rue de la Plante des Champs**
**F-95360 - Montmagny (FR)**

(74) Mandataire : **Moinat, François**
**S.N.E.C.M.A. Service des Brevets Boîte Postale 81**
**F-91003 Evry Cedex (FR)**

## Description

Les systèmes de télémétrie classiques sont basés sur un principe qui consiste à réaliser une image d'un objet par la superposition de deux images du même objet issues de deux chemins optiques différents comportant chacun au moins une réflexion sur un premier miroir mobile en rotation autour d'un axe, les deux axes étant parallèles entre eux. Dans de tels dispositifs, il existe une relation bi-univoque entre la distance à mesurer et la position angulaire des miroirs. La connaissance de cette position, au moment de la superposition des images, équivaut donc à la connaissance de ladite distance à mesurer. Lorsque l'opération de télémétrie doit s'effectuer sur des faibles distances, il est par ailleurs bien connu de donner aux chemins optiques différents des longueurs identiques, ceci afin que les deux images soient de même taille, ce qui est indispensable pour apprécier une parfaite superposition, donc pour avoir une mesure précise.

Un tel dispositif pour l'appréciation des distances est décrit dans le US-A-2 632 357 qui prévoit par ailleurs un système de visée principale directe suivant un trajet unique. Cependant, dans ce dispositif antérieur, les images obtenues sont destinées à être observées à l'oeil et il ne serait pas possible de disposer plusieurs caméras vidéo ayant des fonctions différentes.

L'invention concerne un dispositif du genre ci-dessus dans lequel l'observation de l'image obtenue se fait au moyen d'une caméra vidéo. Pour de nombreuses applications industrielles, il est nécessaire que le système optique de la caméra soit à fort grossissement, donc à champ angulaire d'observation réduit. Dans ce cas, l'utilisation d'un système de collimatage à plus grand champ angulaire, constitué également par une caméra vidéo, est souhaitée de manière à faciliter l'exploitation en fournissant une image d'ambiance.

La présente invention a précisément pour objet de résoudre les problèmes que pose l'utilisation simultanée de ces deux caméras dans un système de collimatage de télémétrie optique mettant en oeuvre un dispositif du genre dans lequel une image d'un objet est obtenue par la superposition de deux images issues de deux chemins optiques différents mais de mêmes longueurs comportant chacun au moins une réflexion sur un premier miroir mobile en rotation autour d'un axe, les deux axes étant parallèles entre eux, l'objet définissant avec un point de référence un premier axe optique. A cet effet, et conformément à la caractéristique principale de l'invention, deux seconds miroirs, coplanaires entre eux, sont respectivement placés sur chacun des deux chemins optiques, symétriquement par rapport audit premier axe optique, de manière à effectuer la télémétrie sur un objet virtuel, et le collimatage suivant le premier axe optique, le point de référence définissant, avec ledit objet virtuel, un second axe optique. De cette manière, le collimatage peut aisément être effectué sur l'objet réel, suivant le premier axe optique. Mais il est également possible de placer, entre les seconds miroirs, un troisième miroir qui intercepte le premier axe optique de manière à ce que le collimatage soit effectué, par réflexion sur ce troisième miroir, sur un objet virtuel. Dans ce cas, le troisième miroir est avantageusement rendu solidaire des seconds miroirs et l'ensemble ainsi constitué est mobile en rotation autour d'un axe commun perpendiculaire au plan déterminé par le premier et le second axe optique. Suivant une dernière caractéristique, un indicateur d'angle, lié à l'ensemble constitué par les seconds et troisième miroirs, délivre une information de position angulaire dudit ensemble qui, en combinaison avec l'information de télémétrie, permet de déterminer les coordonnées polaires de positionnement d'un objet télémétré situé en un point quelconque du plan déterminé par le premier et le second axe optique.

En se référant aux figures schématiques ci-jointes, on va décrire des exemples de mise en oeuvre de l'invention donnés à titre non limitatif.

La figure 1 représente un dispositif de télémétrie optique de l'art antérieur.

La figure 2 représente un dispositif de télémétrie optique équipé d'un système de collimatage conforme à l'invention.

La figure 3 représente un perfectionnement du dispositif représenté à la figure 2.

La figure 4 est une vue en plan permettant de mieux comprendre la disposition de la figure 3.

La figure 5 représente une variante du dispositif représenté à la figure 3.

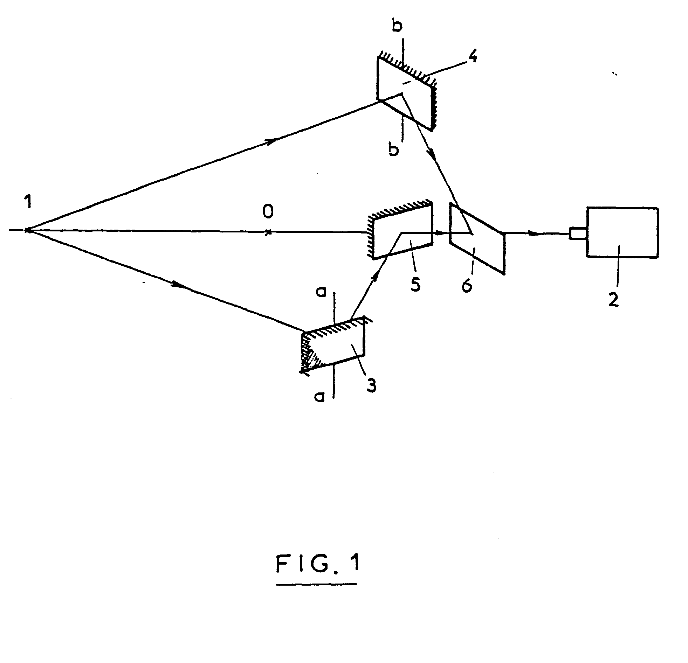

Dans le dispositif connu de la figure 1, une image d'un objet 1 est observée au moyen d'une caméra vidéo 2. Cette image de l'objet 1 est obtenue par la superposition de deux images du même objet issues de deux chemins optiques différents comportant au moins chacun une réflexion sur un premier miroir, respectivement 3 et 4, mobile en rotation autour d'un axe, respectivement aa et bb, les deux axes aa et bb étant parallèles entre eux. Le faisceau lumineux issu, après réflexion, du miroir 3 est réfléchi par un miroir fixe 5 en direction de la caméra 2 tandis que le faisceau lumineux issu du miroir 4 est superposé au précédent par réflexion sur un miroir fixe semi-réfléchissant 6 placé entre le miroir fixe 5 et la caméra vidéo 2. Grâce à cette disposition les chemins optiques ont des longueurs identiques, ce qui est indispensable pour obtenir une bonne superposition des images lorsque le dispositif doit mesurer des courtes distances.

Les rotations des miroirs mobiles 3 et 4, autour des axes respectifs aa et bb, sont synchronisées sans jeu angulaire, toute rotation de l'un entraînant une même rotation de l'autre dans le sens correct. De cette manière, il existe une relation bi-univoque entre la position angulaire des miroirs et la distance à mesurer séparant l'objet 1 d'un point de référence 0 définissant avec l'objet 1 un premier axe optique constituant un axe de symétrie pour les axes aa et bb.

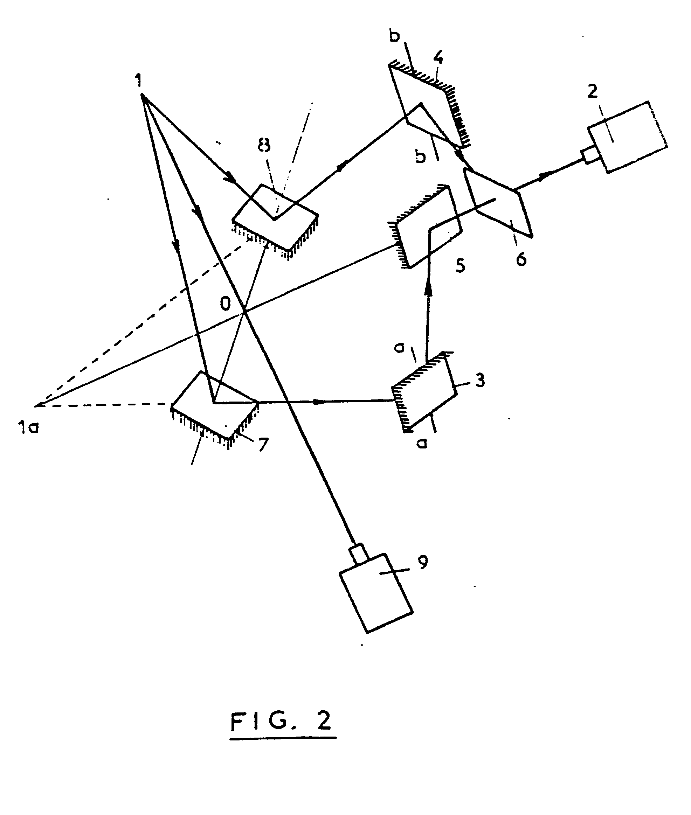

Lorsque la caméra vidéo a un champ angulaire d'observation réduit, un système de collimatage, à plus grand champ angulaire, constitué également par une caméra vidéo, doit être utilisé. Dans le dispositif de la figure 1, il est impossible de disposer un tel dispositif au voisinage de l'axe optique. C'est la raison pour laquelle il est proposé, conformément à l'invention, d'utiliser le dispositif de la figure 2.

Sur cette figure, on retrouve les mêmes éléments que sur la figure 1. Sur les trajets optiques entre l'objet 1 et les premiers miroirs 3 et 4, on a placé deux seconds miroirs, respectivement 7 et 8, de telle manière que l'opération de télémétrie ne s'effectue plus sur l'objet 1 mais sur un objet virtuel 1a. Ainsi, une caméra de collimatage 9 ayant un faible grossissement peut être placée sur le premier axe optique 1-0. Les miroirs 7 et 8 sont coplanaires et occupent des positions telles que leur plan soit perpendiculaire au plan optique défini par les axes optiques 1-0 et 1a-0.

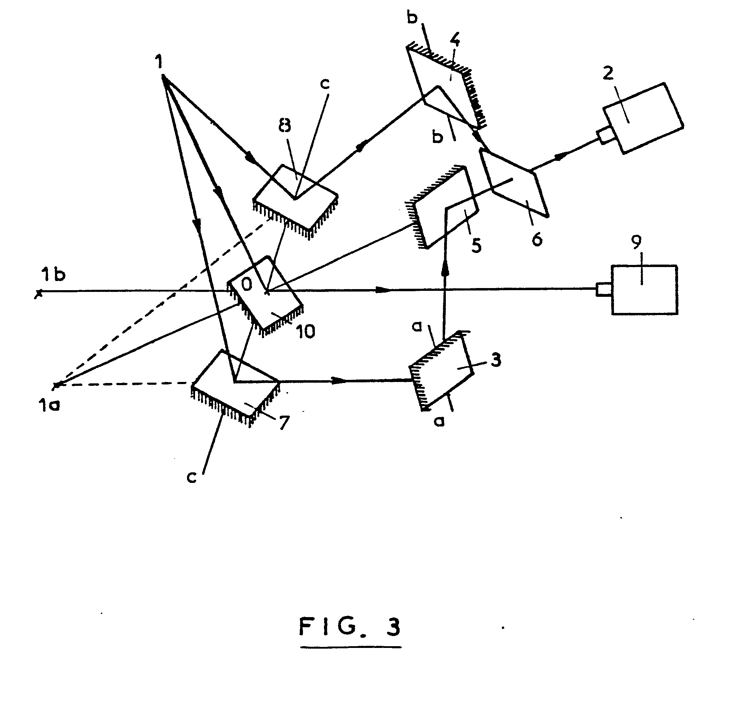

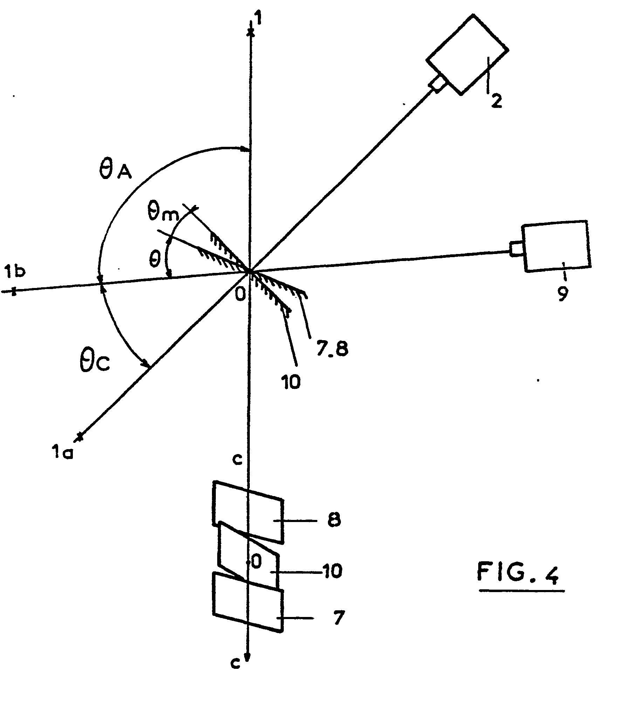

Dans le dispositif représenté à la figure 3, la caméra de collimatage 9 ne travaille plus sur l'objet réel 1 mais sur un objet virtuel 1b. Pour obtenir ce résultat, un troisième miroir 10 est placé entre les seconds miroirs 7 et 8 de manière à intercepter le premier axe optique 1-0. Ce miroir 10 est rendu solidaire des miroirs 7 et 8 et l'ensemble ainsi constitué est mobile en rotation autour d'un axe cc perpendiculaire au plan optique déterminé par les axes 1-0 et 1a-0. Cette nouvelle disposition et les avantages qui en découlent seront mieux compris en se référant au schéma simplifié de la figure 4 qui représente les différents éléments dans le plan optique ci-dessus. On constate qu'en faisant travailler la caméra de collimatage 9, non plus sur l'objet réel 1 mais sur l'objet virtuel 1b créé par le miroir 10 il devient possible d'effectuer une opération de télémétrie sur un important secteur angulaire du plan optique précité sans déplacer dans l'espace l'ensemble des caméras de télémétrie 2 et de collimatage 9, par une simple rotation des trois miroirs 7, 8 et 10 autour de l'axe cc perpendiculaire au plan de la figure (schématisé pour mémoire à la partie basse de celle-ci). Pour ce faire, il faut que l'angle θm du miroir 10 avec les miroirs 7 et 8 soit égal à la moitié de l'angle formé par 0-1b et 0-1a et que ces miroirs soient positionnés comme le montre la figure. En dehors du secteur, centré sur 0, occulté par les caméras 2 et 9, il est possible de faire de la télémétrie sur tout point situé dans un secteur tel que

$$\theta A = 2 \; (\theta + \theta m)$$

repéré par rapport à l'axe de la caméra de collimatage 9.

Si l'ensemble formé par les miroirs 7, 8 et 10 est équipé d'un indicateur de position angulaire, il est alors possible de déterminer, à partir des indications angulaires et de télémétrie, les coordonnées polaires, par rapport au point 0, de chaque objet télémétré.

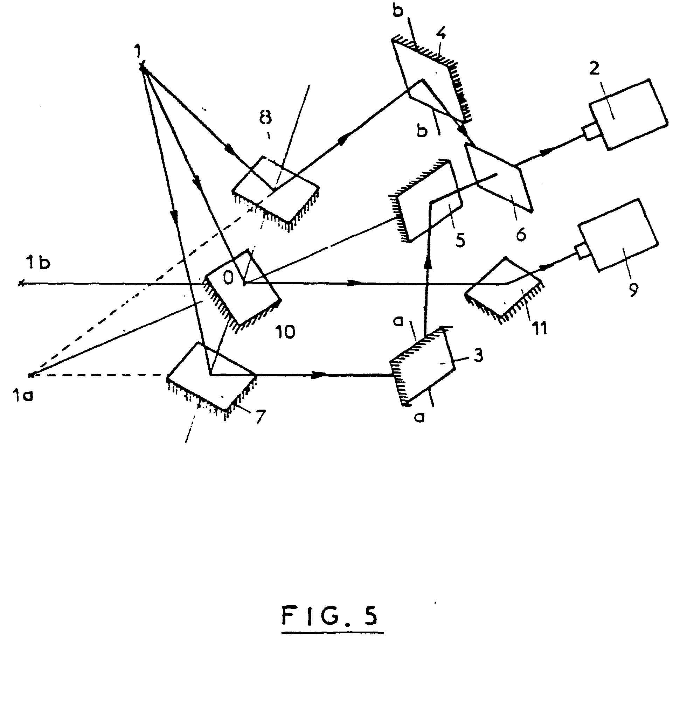

Un dernier perfectionnement est illustré par la figure 5. On y retrouve le même dispositif que sur la figure 3 mais un miroir 11 permet de « recaler » le chemin optique de la caméra 9 de collimatage, ce qui permet de la regrouper avec la caméra 2 de télémétrie. Il est bien entendu que ce miroir 11 pourrait aussi bien être placé sur le chemin optique de ladite caméra 2.

Le dispositif qui vient d'être décrit permet d'effectuer commodément, dans un important secteur angulaire, des opérations de télémétrie, notamment en milieux hostiles humainement inaccessibles.

**Revendications**

1. Système de collimatage pour télémétrie optique mettant en oeuvre un dispositif du genre dans lequel une image d'un objet (1) est obtenue par la superposition de deux images issues de deux chemins optiques différents mais de mêmes longueurs, comportant chacun au moins une réflexion sur un premier miroir (3, 4) mobile en rotation autour d'un axe, les deux axes étant parallèles entre eux, l'objet définissant avec un point de référence un premier axe optique, caractérisé en ce que deux seconds miroirs (7, 8) coplanaires entre eux sont respectivement placés sur chacun des deux chemins optiques, symétriquement par rapport audit premier axe optique, de manière à effectuer la télémétrie sur un objet virtuel (1a), et le collimatage suivant le premier axe optique, le point de référence définissant, avec ledit objet virtuel, un second axe optique.

2. Système de collimatage selon la revendication 1, caractérisé en ce que le collimatage est effectué sur l'objet réel.

3. Système de collimatage selon la revendication 1, caractérisé en ce que, entre les seconds miroirs (7, 8), est placé un troisième miroir (10) qui intercepte le premier axe optique de manière à ce que le collimatage soit effectué, par réflexion sur ce troisième miroir, sur un objet virtuel (1b).

4. Système de collimatage selon la revendication 3, caractérisé en ce que le troisième miroir (10) est solidaire des seconds miroirs (7, 8) et l'ensemble ainsi constitué est mobile en rotation autour d'un axe commun (cc) perpendiculaire au plan déterminé par le premier et le second axe optique.

5. Système de collimatage selon la revendication 4, caractérisé en ce qu'un indicateur d'angle, lié à l'ensemble constitué par les seconds (7, 8) et troisième (10) miroirs, délivre une information de position angulaire dudit ensemble qui, en combinaison avec l'information de télémétrie, permet de déterminer les coordonnées polaires de positionnement d'un objet télémétré (1) situé en un point quelconque du plan déterminé par le premier et le second axe optique.

**Claims**

1. A collimating system for optical telemetry using a device of the type in which an image of an object (1) is obtained by superposing two images from two optical paths which are different but of the same length, each comprising at least one reflection on a first mirror (3, 4) moving in rotation about an axis, wherein the two axes are parallel, the object defining a first optical axis with a reference point, characterized in that two second mirrors (7, 8) which are coplanar are respectively placed on each of the two optical paths symmetrically with respect to the first optical axis so that telemetry can be carried out on an apparent object (1a) and collimation can be carried out along the first optical axis, the reference point defining, with the apparent object, a second optical axis.

2. A collimating system as claimed in claim 1, characterized in that collimation is carried out on the real object.

3. A collimating system as claimed in claim 1, characterized in that a third mirror (10) is positioned between the second mirrors (7, 8), this third mirror intercepting the first optical axis so that collimation is carried out on an apparent object (1b) by reflection on this third mirror.

4. A collimating system as claimed in claim 3, characterized in that the third mirror (10) is rigid with the second mirrors (7, 8) and the assembly formed in this way can move in rotation about a common axis (cc) perpendicular to the plane determined by the first and second optical axes.

5. A collimating system as claimed in claim 4, characterized in that an angle indicator, coupled to the assembly formed by the second (7, 8) and third (10) mirrors provides information on angular position for the assembly which, together with the telemetric information, allows the determination of the polar positioning coordinates of an object (1) subject to telemetry located at any point of the plane determined by the first and the second optical axes.

**Patentansprüche**

1. Visiersystem zur optischen Entfernungsmessung unter Verwendung einer Vorrichtung, bei der ein Bild eines Objekts (1) durch Überlagerung zweier Bilder gewonnen wird, die über verschiedene, jedoch gleich lange optische Wege erzeugt werden, auf denen jeweils wenigstens eine Reflektion an einem ersten, um eine Achse drehbaren Spiegel (3, 4) stattfindet, wobei die Achsen der beiden ersten Spiegel (3, 4) zueinander parallel sind, und wobei das Objekt zusammen mit einem Referenzpunkt (0) eine erste optische Achse definiert, dadurch gekennzeichnet, daß in den genannten optischen Wegen jeweils zweite Spiegel (7, 8) vorgesehen sind, die zueinander koplanar und zu der ersten optischen Achse symetrisch angeordnet sind, derart daß die Entfernungsmessung an einem virtuellen Objekt (1a) und der Visiervorgang entlang der ersten optischen Achse durchgeführt werden, wobei der Referenzpunkt zusammen mit dem virtuellen Objekt eine zweite optische Achse bestimmt.

2. Visiersystem nach Anspruch 1, dadurch gekennzeichnet, daß der Visiervorgang auf das reelle Objekt stattfindet.

3. Visiersystem nach Anspruch 1, dadurch gekennzeichnet, daß zwischen den zweiten Spiegeln (7, 8) ein dritter Spiegel (10) angeordnet ist, der die erste optische Achse so schneidet, daß der Visiervorgang durch Reflektion an dem dritten Spiegel (19) auf ein virtuelles Objekt (1b) durchgeführt wird.

4. Visiersystem nach Anspruch 3, dadurch gekennzeichnet, daß der dritte Spiegel (10) mit den zweiten Spiegeln (7, 8) fest verbunden ist und daß die so gebildete Gesamteinheit um eine gemeinsame Achse (cc) drehbar ist, die senkrecht zu der durch die erste und die zweite optische Achse definierten Ebene verläuft.

5. Visiersystem nach Anspruch 4, dadurch gekennzeichnet, daß mit der aus den zweiten Spiegeln (7, 8) und dem dritten Spiegel (10) gebildeten Gesamteinheit ein Winkelanzeiger verbunden ist, der eine Information über die Winkelposition dieser Gesamteinheit liefert, die zusammen mit der Entfernungsmessungsinformation die Bestimmung der polaren Positionskoordinaten eines Meßobjekts ermöglicht, das sich an einem beliebigen Punkt auf der von der ersten und der zweiten optischen Achse bestimmten Ebene befindet.

F I G. 1

EP 0 196 980 B1

FIG. 2

2

F I G. 3

FIG. 4

FIG. 5